# FASCICULE DE BREVET EUROPEEN

(11) **EP 3 068 987 B1**
(45) Date de publication et mention de la délivrance du brevet: **08.05.2019**
(21) Numéro de dépôt: 14799362.0
(22) Date de dépôt: 31.10.2014
(51) Int. Cl.: F01N 3/20, F01N 3/10

(54) **PROCÉDÉ DE DÉPOLLUTION DES GAZ D'ÉCHAPPEMENT, NOTAMMENT DE MOTEUR À COMBUSTION INTERNE, EN PARTICULIER POUR VÉHICULE AUTOMOBILE, ET INSTALLATION UTILISANT UN TEL PROCÉDÉ**
VERFAHREN ZUR REINIGUNG VON ABGASEN, INSBESONDERE FÜR EINE BRENNKRAFTMASCHINE, INSBESONDERE FÜR EIN KRAFTFAHRZEUG, UND ANLAGE MIT SOLCH EINEM VERFAHREN
METHOD FOR PURIFYING EXHAUST GASES, PARTICULARLY FOR AN INTERNAL COMBUSTION ENGINE, IN PARTICULAR FOR A MOTOR VEHICLE, AND INSTALLATION USING SUCH A METHOD

(30) Priorité: 15.11.2013 FR 1361158
(43) Date de publication de la demande: 21.09.2016
(73) Titulaire: IFP Energies nouvelles, 92500 Rueil-Malmaison (FR)
(72) Inventeur: RAUX, Stéphane, F-69530 Orlienas (FR)
(74) Mandataire: IFP Energies nouvelles
(86) Numéro de dépôt international: PCT/EP2014/073471
(87) Numéro de publication internationale: WO 2015/071121

(56) Documents cités:
- EP-A1- 2 194 249
- WO-A1-2011/123620
- US-A1- 2006 010 857

## Description

La présente invention se rapporte à un procédé de dépollution des gaz d'échappement, notamment de moteur à combustion interne, en particulier pour véhicule automobile.

Elle vise plus particulièrement un procédé pour traiter les polluants contenus dans les gaz d'échappement d'un moteur à combustion interne à autoallumage, notamment de type Diesel, mais n'écarte en aucune manière un tel procédé pour les moteurs à allumage commandé, tels que ceux fonctionnant avec un carburant gazeux ou avec de l'essence, et en particulier en mélange pauvre.

Elle concerne également une installation de dépollution des gaz d'échappement utilisant ce procédé.

Comme cela est connu, les gaz d'échappement de ces moteurs contiennent de nombreux polluants, tels que des hydrocarbures imbrûlés, du monoxyde de carbone, des oxydes d'azote (NO et NO₂) plus communément baptisés sous le terme de NOx, pour les moteurs fonctionnant à l'essence ou au gaz, et en sus des particules pour les moteurs de type Diesel.

Il est communément admis que les NOx sont le résultat de la combustion qui se déroule avec des températures élevées et avec de fortes teneurs en oxygène. Ces conditions sont généralement rencontrées lors de tous types de combustions, particulièrement celles ayant lieu en mélange pauvre, comme l'injection directe en mélange pauvre, quel que soit le carburant utilisé.

Or, les NOx présentent un inconvénient majeur car ils ont un impact néfaste directement sur la santé de l'être humain et indirectement par la formation secondaire d'ozone troposphérique.

Afin de respecter les normes d'émissions de polluants et de préserver l'environnement et la santé humaine, il est devenu nécessaire de traiter ces polluants avant de rejeter les gaz d'échappement dans l'atmosphère.

Comme cela est généralement connu, ceci est réalisé grâce à un traitement en dépollution des gaz d'échappement circulant dans la ligne d'échappement du moteur.

Ainsi, pour traiter les hydrocarbures imbrûlés et le monoxyde de carbone pour des moteurs fonctionnant en mélange pauvre, des moyens de catalyse, tel qu'un catalyseur d'oxydation, sont placés sur la ligne d'échappement.

En ce qui concerne les gaz d'échappement d'un moteur Diesel, un filtre à particules est avantageusement placé sur cette ligne de manière à capter puis à éliminer les particules présentes dans les gaz d'échappement et éviter ainsi qu'elles soient rejetées dans l'atmosphère.

Ce filtre, qui peut être également un filtre catalysé, doit être régénéré périodiquement afin qu'il conserve toutes ses capacités de filtration en réalisant une combustion des particules retenues dans ce filtre. Ces opérations de régénération consistent principalement en une augmentation de la température du filtre, généralement au moyen d'une oxydation exothermique sur un catalyseur placé en amont du filtre d'espèces chimiques réductrices issues de la combustion ou d'une injection directement à l'échappement.

En ce qui concerne les NOx, les gaz d'échappement traversent également d'autres moyens de catalyse, notamment des catalyseurs du type catalyseur RCS (pour Réduction Catalytique Sélective). Ce catalyseur RCS permet de réduire sélectivement les NOx en azote grâce à l'action d'un agent réducteur.

Cet agent, qui est généralement injecté en amont du catalyseur RCS, peut être de l'ammoniac ou un composé générant de l'ammoniac par décomposition, comme de l'urée, ou être un hydrocarbure provenant d'une substance hydrocarbonée.

Actuellement, la technique la plus répandue pour la dépollution des NOx est la catalyse RCS par l'ammoniac.

Cet ammoniac est obtenu indirectement par décomposition d'un précurseur injecté sous forme liquide, généralement de l'urée en solution aqueuse à 32,5%m plus connu sous la dénomination commerciale nommée "AdBlue" ou "DEF".

Ainsi, la solution d'urée est injectée dans la ligne d'échappement en amont du catalyseur RCS. L'eau contenue dans cette solution est rapidement vaporisée sous l'effet de la température des gaz d'échappement, puis chaque molécule d'urée se décompose suivant deux étapes en deux molécules d'ammoniac :

(NH₂)₂CO (urée) → NH₃ (ammoniac) + HNCO (acide isocyanique) - (1)

HNCO + H₂O → NH₃ + CO₂ - (2)

Alternativement de l'ammoniac peut être directement injecté dans la ligne d'échappement amont du catalyseur RCS.

Comme cela est mieux decrit dans les documents WO 2011/123620 ou WO 2012/027368, cet ammoniac peut provenird'un système de stockage de l'ammoniac ou encore d'une opération d'électrolyse de l'urée.

En effet, cette électrolyse produit de l'ammoniac et de l'azote à l'une des électrodes et de l'hydrogène à l'autre des électrodes. L'ammoniac et l'azote sont introduits dans la ligne d'échappement en amont du catalyseur RCS et l'hydrogène est utilisé comme carburant pour le moteur à combustion interne de manière à améliorer son rendement energétique. Le document EP 2 194 249 A décrit une méthode et un système de traitement des gaz d'échappement.

Ces techniques bien que donnant satisfaction présentent des inconvénients non négligeables.

En effet, pour un catalyseur RCS donné, l'efficacité de la réaction dépend principalement de la composition en NO et NO₂ des NOx, de la température et du débit des gaz.

Ainsi, à des températures inférieures à environ 150°C, la catalyse par Réduction Catalytique Sélective des NOx avec de l'ammoniac est inactive ou très peu active. De plus, dans le cas d'une utilisation d'un précurseur à base d'urée, pour des températures des gaz d'échappement inférieures à environ 180°C, la vaporisation de l'eau contenue dans la solution d'urée se fait difficilement ainsi que la décomposition de l'urée en ammoniac et acide isocyanique. Des dépôts risquent alors de se former pouvant aboutir au bouchage de la ligne d'échappement. Dans ces conditions de température, l'injection dans la ligne d'échappement de la solution d'urée est généralement évitée.

De ce fait, les NOx sont rejetés dans l'atmosphère sans être traités par le catalyseur RCS.

La présente invention se propose de remédier aux inconvénients ci-dessus mentionnés grâce à un procédé et une installation qui permettent de rendre opérationnelle les opérations de catalyse RCS à basse température d'une manière simple et peu coûteuse.

A cet effet, la présente invention concerne un procédé de dépollution des gaz d'échappement circulant dans une ligne d'échappement, notamment d'un moteur à combustion interne, ladite ligne comprenant un moyen de catalyse à réduction catalytique sélective des oxydes d'azote sensible à l'ammoniac traversé par lesdits gaz et des moyens d'injection d'un agent réducteur dans ladite ligne pour traiter les polluants lors du passage des gaz au travers du moyen de catalyse, caractérisé en ce qu'il consiste :
- à décomposer l'agent réducteur en un composé avec une phase gazeuse d'hydrogène et un composé avec une phase gazeuse d'ammoniac,
- pour une température de gaz d'échappement inférieure à environ 150°C, à injecter la phase gazeuse d'hydrogène dans la ligne d'échappement en association avec un moyen de catalyse des NOX sensible à l'hydrogène pour traiter les polluants de ces gaz.

Le procédé peut consister à utiliser un moyen de catalyse à réduction catalytique sélective en tant que moyen de catalyse des NOX sensible à l'hydrogène.

Le procédé peut consister à utiliser un moyen de catalyse d'oxydation en tant que moyen de catalyse des NOX sensible à l'hydrogène.

Le procédé peut consister, pour une température de gaz d'échappement supérieure à environ 150°C, à injecter la phase gazeuse d'ammoniac dans la ligne d'échappement en association avec le moyen de catalyse à réduction catalytique sélective des NOX sensible à l'ammoniac pour traiter les polluants de ces gaz.

Le procédé peut consister, pour une température de gaz d'échappement supérieure à environ 180°C, à injecter l'agent réducteur dans la ligne d'échappement en association avec le moyen de catalyse à réduction catalytique sélective des NOX sensible à l'ammoniac pour traiter les polluants de ces gaz.

Le procédé consiste, pour une température de gaz d'échappement inférieure à environ 150°C, à injecter la phase gazeuse d'hydrogène dans la ligne d'échappement en association avec au moins un moyen de catalyse additionnel.

Le procédé consiste à décomposer l'agent réducteur par électrolyse.

Le procédé peut consister à placer au moins l'un des composés dans un réservoir.

Le procédé peut consister à contrôler l'injection d'au moins un des composés par une vanne doseuse.

L'invention concerne également une installation de dépollution des gaz d'échappement circulant dans une ligne d'échappement, notamment d'un moteur à combustion interne, comprenant un moyen de catalyse à réduction catalytique sélective des NOX sensible à l'ammoniac placé sur la ligne d'échappement, des moyens d'injection d'un agent réducteur dans ladite ligne pour traiter les polluants lors du passage des gaz au travers du moyen de catalyse et d'un moyen d'électrolyse de l'agent réducteur, caractérisé en ce que la ligne d'échappement comprend un moyen de catalyse des NOX sensible à l'hydrogène et un injecteur d'un composé en phase gazeuse d'hydrogène provenant du moyen d'électrolyse.

L'installation peut comprendre un catalyseur à réduction catalytique sélective en tant que moyen de catalyse des NOX sensible à l'hydrogène.

L'installation peut comprendre un catalyseur d'oxydation en tant que moyen de catalyse des NOX sensible à l'hydrogène.

La ligne d'échappement peut comprendre un injecteur d'un composé en phase gazeuse d'ammoniac provenant du moyen d'électrolyse pour injecter l'ammoniac en amont du moyen de catalyse à réduction catalytique sélective des NOX sensible à l'ammoniac.

La ligne d'échappement peut comprendre au moins un moyen de catalyse additionnel auquel est associé un injecteur d'un composé en phase gazeuse d'hydrogène provenant du moyen d'électrolyse.

L'installation peut comprendre une vanne doseuse placée sur la conduite reliant le moyen d'électrolyse à l'injecteur.

L'installation peut comprendre un réservoir placé sur la conduite reliant le moyen d'électrolyse à l'injecteur.

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre une installation utilisant le procédé selon l'invention ;
- la figure 2 qui illustre une première variante de la figure 1 et
- la figure 3 qui est une autre variante de la figure 1.

Cette installation de traitement en dépollution des gaz d'échappement comprend un moyen d'électrolyse 10 d'un précurseur à base d'urée et une ligne d'échappement 12 à laquelle il est associé.

Par gaz d'échappement, il est entendu les gaz d'échappement provenant d'un moteur à combustion interne, notamment pour véhicule automobile, mais cela n'écarte en aucune manière tous les autres types de gaz d'échappement résultant d'une combustion, comme ceux issus de chaudières.

Le moyen d'électrolyse du précurseur à base d'urée, qui est décrit de manière plus détaillée dans les documents WO 2011/123620 ou WO 2012/027368, comprend un réservoir 14 contenant le précurseur 16, de préférence en solution aqueuse, et alimentant une cellule d'électrolyse 18.

Pour simplifier la suite de la description, le précurseur à base d'urée est désigné uniquement sous le vocable d'urée.

La cellule comprend une cuve fermée de réception 20 de l'urée 16 provenant du réservoir, une cathode 22 et une anode 24 logées à l'intérieur de la cuve en étant immergées dans l'urée, une source électrique 26 alimentant, par des conducteurs électriques 28, l'anode et la cathode et des sorties d'évacuation 30 et 32 des composés résultant de l'électrolyse.

La source électrique peut être de différentes origines, comme des batteries, des piles à combustibles,...

Comme décrit dans les documents précités, cette cellule permet de produire par électrolyse un composé avec une phase gazeuse d'ammoniac (NH₃) et d'azote (N₂) ainsi qu'un autre composé avec une phase gazeuse d'hydrogène (H₂).

Pour des raisons de simplification dans la suite de la description, la sortie 30 est considérée comme celle évacuant la phase gazeuse d'hydrogène alors que la sortie 32 est celle permettant l'évacuation de la phase gazeuse d'ammoniac et d'azote.

Avantageusement, une cloison de séparation 34 est placée à l'intérieur de la cuve de manière à séparer la cathode 22 de l'anode 24 et la sortie 30 de la sortie 32 et à isoler la phase gazeuse d'hydrogène de la phase gazeuse d'ammoniac et d'azote située en partie haute de la cuve.

Cette cuve est alimentée en urée sous forme liquide par une conduite 36 reliant le fond de cette cuve au réservoir 14. Avantageusement, cette conduite porte une pompe doseuse 38 permettant d'assurer le remplissage suffisant de la cuve pour que l'anode et la cathode baignent constamment dans l'urée.

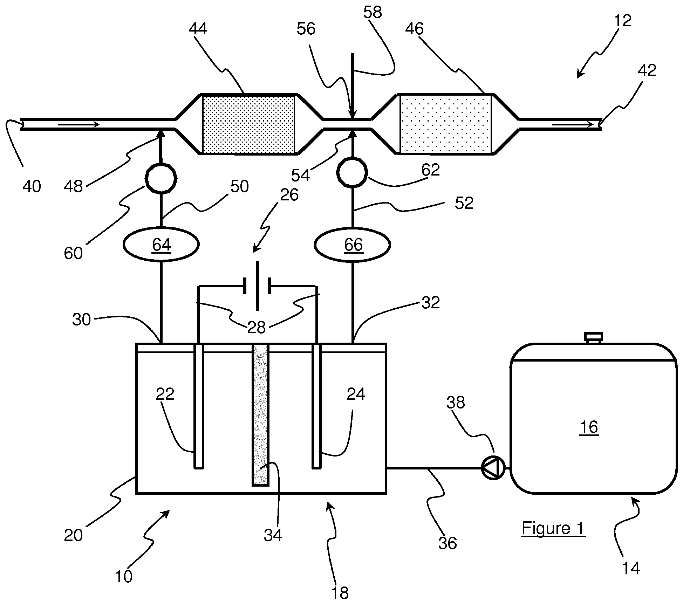

Comme mieux visible sur la figure 1, la ligne d'échappement 12 comprend, dans le sens de circulation des gaz d'échappement allant de l'entrée 40 de cette ligne vers sa sortie 42, au moins un moyen de catalyse RCS des NOx. Plus précisément, cette ligne comprend deux catalyseurs, un catalyseur, dit catalyseur à hydrogène 44 qui réagit à l'hydrogène, placé à proximité de l'entrée de gaz d'échappement. Ce catalyseur est suivi en série d'un catalyseur RCS, dénommé catalyseur à ammoniac 46 qui opère la réduction des NOx par l'ammoniac.

Bien entendu et cela sans sortir du cadre de l'invention, le catalyseur à hydrogène 44 peut être un catalyseur d'oxydation ou un autre catalyseur RCS.

Pour simplifier le reste de la description qui va suivre, l'exemple choisi pour le catalyseur à hydrogène est celui d'un catalyseur RCS.

De manière connue en soi, la ligne d'échappement porte un capteur de température (non représenté) placé à l'entrée de la ligne d'échappement pour connaître à tout moment la température des gaz d'échappement qui circulent dans cette ligne.

Alternativement, il peut être prévu d'utiliser des moyens logiques et/ou informatiques qui permettent d'estimer à tout moment la température des gaz d'échappement qui circulent dans la ligne.

Comme mieux visible sur la figure 1, la sortie d'hydrogène 30 est reliée à un injecteur d'hydrogène 48 placé sur la ligne en amont du catalyseur à hydrogène 44 par une conduite 50. Similairement, la sortie d'ammoniac et d'azote est reliée, par une conduite 52, à un injecteur d'ammoniac et d'azote 54 placé en amont du catalyseur à ammoniac 46 entre le catalyseur à hydrogène et ce catalyseur à ammoniac. Enfin, la ligne 12 porte, de manière connue en soi, un injecteur d'urée 56, placé en amont du catalyseur à ammoniac 46 et qui est relié par une conduite 58 à un circuit d'injection d'urée (non représenté) dont le réservoir 14 peut faire partie.

Avantageusement, au moins l'une des conduites, ici les deux, portent une vanne doseuse 60 et 62 permettant de contrôler la quantité d'hydrogène (vanne 60) et/ou la quantité d'ammoniac et d'azote (vanne 62) qui sera injectée dans la ligne d'échappement.

De même, les conduites peuvent porter un réservoir tampon 64 et 66 dans lequel sera stocké l'hydrogène pour le réservoir 64 et l'ammoniac pour le réservoir 66 qui seront produits par la cellule 18.

Bien entendu, le contrôle de la source électrique 26, de la pompe 38 et des vannes 60, 62 seront gérés par tous moyens de commande, comme un calculateur.

En fonctionnement, et en considérant que l'un au moins des réservoirs ne contient pas suffisamment de composés (hydrogène et/ou ammoniac) pour assurer la réduction des NOx et pour des températures de gaz d'échappement inférieures à environ 150°C en particulier lors du démarrage, la cellule d'électrolyse 18 est rendue opérationnelle par la mise sous tension de la cathode 22 et l'anode 24.

Cette mise sous tension permet de générer de l'hydrogène à la sortie 30 de la cellule et de l'ammoniac et de l'azote à la sortie 32.

Simultanément à la génération d'hydrogène et d'ammoniac par la cellule 18, la vanne 62 pour l'ammoniac est commandée en position de fermeture alors que la vanne 60 est commandée en position d'ouverture.

Par cela de l'hydrogène est injecté en amont du catalyseur d'hydrogène 44 par l'injecteur 48 via le réservoir d'hydrogène 64 alors que l'ammoniac est stocké dans le réservoir d'ammoniac 66.

Bien entendu, si la quantité d'hydrogène et d'ammoniac contenu dans les réservoirs 64 et 66 est suffisante, la cellule 18 n'est pas activée et les vannes 60 et 62 sont commandées comme décrit ci-dessus.

Cette injection d'hydrogène permet ainsi de pouvoir traiter les NOx contenus dans les gaz d'échappement qui vont traverser le catalyseur 44.

En effet, le demandeur a pu mettre en avant par différentes analyses que l'hydrogène est un excellent réducteur des NOx et ce avec des températures de l'ordre d'à peine 100°C.

A titre d'exemple, des catalyseurs RCS à hydrogène avec une composition à base de Pt/SiO₂ ou Pt/MgCeO ou Pt/WO₃/ZrO₂ ont montré de bonnes activité et sélectivité dès 90 ° C.

Les catalyseurs de type Ag/Al₂O₃ sont également de bons candidats.

Lors de tests réalisés avec un catalyseur à base de platine sur zéolithe SAPO-34, celui-ci a permis d'arriver à des taux de conversion de NO de 78% avec une sélectivité pour N₂ de 75% à une VVH de 80 000 h⁻¹ et une température des gaz de 120°C.

De manière avantageuse, les quantités d'hydrogène nécessaires à la catalyse RCS sont très faibles. En considérant 2H₂ + 2NO → N₂ + 2H₂O et un besoin de réduction de, par exemple, 0.4 g de NOx sur les 400 premières secondes d'un cycle NEDC, 40 mg de H₂ sont nécessaires (rendement de réaction estimé ici à 66%).

Dés que la température des gaz d'échappement est supérieure à 150°C, la vanne 60 d'hydrogène est placée en position de fermeture de façon à arrêter l'injection d'hydrogène dans la ligne 12 tout en stockant cet hydrogène dans le réservoir 64 d'hydrogène.

Dans le même temps, la vanne 62 d'ammoniac est commandée en ouverture et l'ammoniac contenu dans le réservoir 66 est introduit par l'injecteur 54 d'ammoniac dans les gaz d'échappement circulant dans la ligne 12 entre les catalyseurs 44 et 46.

Les NOx présents dans les gaz d'échappement sont alors traités par une catalyse à l'ammoniac dans le catalyseur 46.

Une fois que les gaz d'échappement ont atteint une température élevée (de l'ordre de 180 à 200°C, l'injection d'ammoniac est arrêtée par fermeture de la vanne 62 et la cellule 18 est rendue non opérationnelle par la coupure de son alimentation électrique à partir de la source 26.

Suite à cela, le traitement des NOx des gaz d'échappement est réalisé de manière conventionnelle par l'injection d'urée dans la ligne 12 au travers de l'injecteur 56 situé entre les catalyseurs 44 et 46.

Grâce à cette installation et au procédé qui lui est attaché, le traitement des NOx peut être assuré sur un très large éventail de températures à partir d'environ 100°C jusqu'à plus de 450°C.

Bien entendu, il est à la portée de l'homme de métier d'envisager toutes les actions nécessaires et indispensables pour contrôler les vannes doseuses (temps d'injection, débit,...) de manière à obtenir la quantité suffisante de composé en amont des différents catalyseurs pour assurer la dépollution des gaz d'échappement après leur passage au travers des catalyseurs RCS 44 et 46.

Il est à noter que la cellule 18 peut être en activité lors du traitement de manière conventionnelle des NOx par de l'urée et cela pour assurer la production et le stockage d'hydrogène et d'ammoniac dans les réservoirs 64 et 66. Ces composés pourront ainsi être utilisés lors d'un prochain démarrage du moteur avec des températures de gaz d'échappement d'environ 150°C.

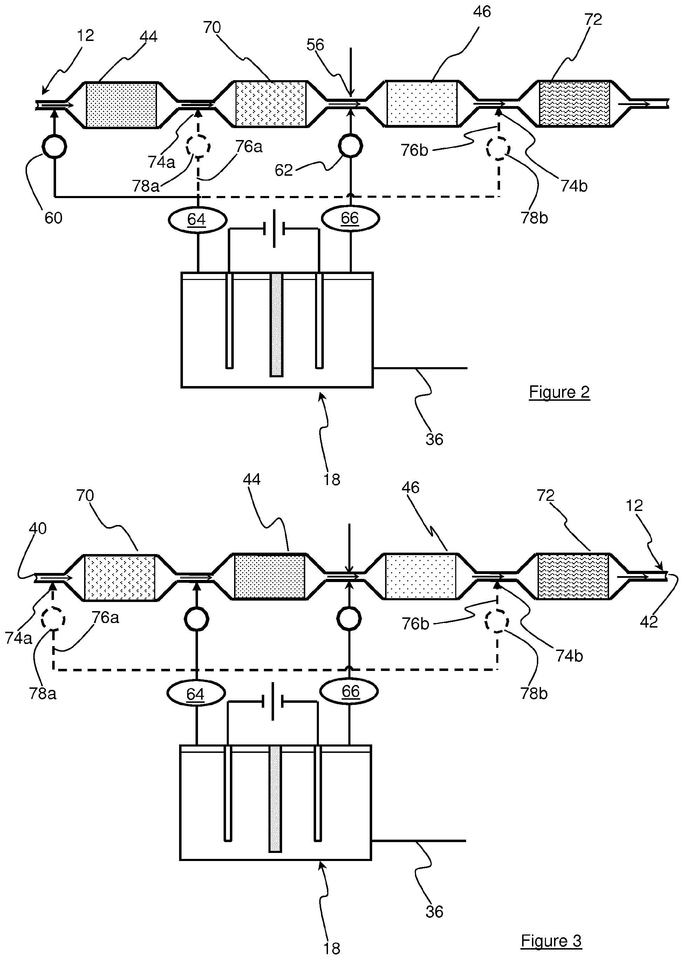

Les exemples des figures 2 et 3 illustrent les différentes possibilités d'utilisation de l'hydrogène pour l'amorçage d'autres catalyseurs ainsi qu'à l'aide à la régénération de filtre à particules, notamment.

Sur l'exemple de la figure 2, il est illustré la possibilité de placer un catalyseur additionnel 70 sur la ligne d'échappement 12 entre le catalyseur RCS 44 d'hydrogène et le catalyseur RCS 46 d'ammoniac. Un autre catalyseur additionnel 72 peut être également être situé sur cette ligne après le catalyseur RCS 46 d'ammoniac.

Dans l'exemple illustré, les catalyseurs additionnels peuvent être un catalyseur d'oxydation ou un catalyseur trois voies ou un filtre à particules catalysé ou non.

Comme mieux montré sur la figure 2, les catalyseurs additionnels 70 et 72 sont associés chacun à un injecteur d'hydrogène 74a et 74b placés sur la ligne d'échappement en amont de ces catalyseurs. Chacun de ces injecteurs est relié au réservoir d'hydrogène 64 par une conduite 76a et 76b portant chacune une vanne doseuse 78a et 78b.

Ainsi, lors du démarrage du véhicule et pour des températures de gaz d'échappement inférieurs à environ 150°C, la cellule 18 est rendue opérationnelle comme précédemment décrit en générant de l'hydrogène et de l'ammoniac.

Lors de ce démarrage, la vanne 62 pour l'ammoniac est commandée en position de fermeture alors que la vanne 60 est commandée en position d'ouverture pour injecter de l'hydrogène en amont du catalyseur d'hydrogène 44 par l'injecteur 48. Eventuellement, les vannes 78a et/ou 78b sont commandées en position d'ouverture pour injecter l'hydrogène en amont des catalyseurs additionnels 70 et/ou 72 respectivement par les injecteurs 74a et/ou 74b soit pour l'amorçage thermique de catalyseur dans le cas de l'utilisation de catalyseur d'oxydation.

Cette injection d'hydrogène permet de traiter les NOx contenus dans les gaz d'échappement qui vont traverser le catalyseur 44 et d'augmenter la température des gaz d'échappement pour amorcer les opérations de catalyse des catalyseurs 70 et/ou 72.

Dés que la température atteint un seuil suffisant, de l'ordre de 150°C, l'injection d'hydrogène est arrêtée au niveau du catalyseur 44 et l'injection d'ammoniac est entreprise au niveau du catalyseur RCS 46.

Bien entendu, l'injection d'hydrogène au niveau des catalyseurs 70 et/ou 72 est interrompue dés que ceux-ci ont atteint leur température de fonctionnement (catalyseur d'oxydation).

Après cette opération, le procédé de dépollution des gaz d'échappement se poursuit comme décrit ci-dessus avec l'arrêt de l'injection d'ammoniac et l'introduction d'urée dans la ligne 12 par l'injecteur 56 pour des températures de gaz supérieures à une fourchette de 180°C à 200°C.

Dans le cas ou l'un des deux catalyseurs 70 ou 72 est un filtre à particules catalysé, l'injection de l'hydrogène en amont de ce filtre, par l'injecteur 74a ou 74b, pourra être commandée afin d'aider à la combustion de particules contenues dans le filtre.

L'exemple de la figure 3 diffère de celui de la figure 2 par le positionnement des catalyseurs additionnels 70 et 72.

Sur cette figure, le catalyseur additionnel 70 est placé entre l'entrée 40 des gaz d'échappement et le catalyseur RCS 44 d'hydrogène et le catalyseur 72 est situé après le catalyseur RCS 46 d'ammoniac au voisinage de la sortie 42 de gaz d'échappement.

Comme mentionné pour la figure 2, les catalyseurs 70 et 72 sont rattachés à un injecteur d'hydrogène 74a et 74b ainsi qu'à une conduite 76a et 76b portant une vanne doseuse 78a et 78b et reliée au réservoir 64.

Le fonctionnement de l'exemple de cette figure 3 est identique à celui de la figure 2.

## Revendications

1. Procédé de dépollution des gaz d'échappement circulant dans une ligne d'échappement (12), notamment d'un moteur à combustion interne, ladite ligne comprenant un moyen de catalyse à réduction catalytique sélective des oxydes d'azote (46) sensible à l'ammoniac traversé par lesdits gaz et des moyens d'injection (56, 58) d'un agent réducteur dans ladite ligne pour traiter les polluants lors du passage des gaz au travers du moyen de catalyse, **caractérisé en ce qu'**il consiste :
- à décomposer, par électrolyse, l'agent réducteur en un composé avec une phase gazeuse d'hydrogène et un composé avec une phase gazeuse d'ammoniac,
- pour une température de gaz d'échappement inférieure à environ 150°C, à injecter la phase gazeuse d'hydrogène provenant de ladite électrolyse dans la ligne d'échappement en association avec un moyen de catalyse des NOX (44) sensible à l'hydrogène pour traiter les polluants de ces gaz.

2. Procédé de dépollution des gaz d'échappement selon la revendication 1, **caractérisé en ce qu'**il consiste à utiliser un moyen de catalyse à réduction catalytique sélective en tant que moyen de catalyse des NOX (44) sensible à l'hydrogène.

3. Procédé de dépollution des gaz d'échappement selon la revendication 1, **caractérisé en ce qu'**il consiste à utiliser un moyen de catalyse d'oxydation en tant que moyen de catalyse des NOX (44) sensible à l'hydrogène.

4. Procédé de dépollution des gaz d'échappement selon l'une des revendications 1 à 3, **caractérisé en ce qu'**il consiste, pour une température de gaz d'échappement supérieure à environ 150°C, à injecter la phase gazeuse d'ammoniac dans la ligne d'échappement en association avec le moyen de catalyse à réduction catalytique sélective des NOX (46) sensible à l'ammoniac pour traiter les polluants de ces gaz.

5. Procédé de dépollution des gaz d'échappement selon l'une des revendications précédentes, **caractérisé en ce qu'**il consiste, pour une température de gaz d'échappement supérieure à environ 180°C, à injecter l'agent réducteur dans la ligne d'échappement en association avec le moyen de catalyse à réduction catalytique sélective des NOX (46) sensible à l'ammoniac pour traiter les polluants de ces gaz.

6. Procédé de dépollution des gaz d'échappement selon l'une des revendications précédentes, **caractérisé en ce qu'**il consiste, pour une température de gaz d'échappement inférieure à environ 150°C, à injecter la phase gazeuse d'hydrogène dans la ligne d'échappement en association avec au moins un moyen de catalyse additionnel (70, 72).

7. Procédé de dépollution des gaz d'échappement selon l'une des revendications précédentes, **caractérisé en ce qu'**il consiste à placer au moins l'un des composés dans un réservoir (64, 66).

8. Procédé de dépollution des gaz d'échappement selon l'une des revendications précédentes, **caractérisé en ce qu'**il consiste à contrôler l'injection d'au moins un des composés par une vanne doseuse (60, 62).

9. Installation de dépollution des gaz d'échappement circulant dans une ligne d'échappement, notamment d'un moteur à combustion interne, comprenant un moyen de catalyse à réduction catalytique sélective des NOX (46) sensible à l'ammoniac placé sur la ligne d'échappement, des moyens d'injection (56, 58) d'un agent réducteur dans ladite ligne pour traiter les polluants lors du passage des gaz au travers du moyen de catalyse et d'un moyen d'électrolyse (18) de l'agent réducteur, **caractérisé en ce que** la ligne d'échappement comprend un moyen de catalyse des NOX (44) sensible à l'hydrogène et un injecteur d'un composé en phase gazeuse d'hydrogène (48) provenant du moyen d'électrolyse, et **en ce que** la ligne d'échappement (12) comprend un injecteur d'un composé en phase gazeuse d'ammoniac (54) provenant du moyen d'électrolyse pour injecter l'ammoniac en amont du moyen de catalyse à réduction catalytique sélective des NOX (46) sensible à l'ammoniac.

10. Installation de dépollution des gaz d'échappement selon la revendication 9, **caractérisé en ce qu'**elle comprend un catalyseur à réduction catalytique sélective en tant que moyen de catalyse des NOX (44) sensible à l'hydrogène.

11. Installation de dépollution des gaz d'échappement selon la revendication 9, **caractérisé en ce qu'**elle comprend un catalyseur d'oxydation en tant que moyen de catalyse des NOX (44) sensible à l'hydrogène.

12. Installation de dépollution des gaz d'échappement selon l'une des revendications 9 à 11, **caractérisé en ce que** la ligne d'échappement comprend au moins un moyen de catalyse additionnel (70, 72) auquel est associé un injecteur d'un composé en phase gazeuse d'hydrogène (74a, 74b) provenant du moyen d'électrolyse (18).

13. Installation de dépollution des gaz d'échappement selon l'une des revendications 9 à 12, **caractérisée en ce qu'**elle comprend une vanne doseuse (60, 62, 78a, 78b) placée sur la conduite (50, 52, 76a, 76b) reliant le moyen d'électrolyse (18) à l'injecteur (48, 54, 74a, 74b).

14. Installation de dépollution des gaz d'échappement selon l'une des revendications 9 à 13, **caractérisé en ce qu'**elle comprend un réservoir (64, 66) placé sur la conduite (50, 52, 76a, 76b) reliant le moyen d'électrolyse (18) à l'injecteur (48, 54, 74a, 74b).

## Patentansprüche

1. Verfahren zur Reinigung der Abgase, die in einer Abgasleitung (12) zirkulieren, insbesondere einer Brennkraftmaschine, wobei die Leitung ein Katalysemittel zur selektiven katalytischen Reduktion der Stickoxide (46), das ammoniakempfindlich ist, durch das die Gase strömen, und Mittel zum Einspritzen (56, 58) eines Reduktionsmittels in die Leitung aufweist, um die Schadstoffe während des Durchgangs der Gase durch das Katalysemittel zu behandeln, **dadurch gekennzeichnet, dass** es darin besteht:
- durch Elektrolyse das Reduktionsmittel in eine Verbindung mit einer gasförmigen Wasserstoffphase und eine Verbindung mit einer gasförmigen Ammoniakphase zu zersetzen,
- für eine Abgastemperatur von weniger als etwa 150 °C die gasförmige Wasserstoffphase, die aus der Elektrolyse stammt, in die Abgasleitung in Verbindung mit einem Katalysemittel der NOX (44), das wasserstoffempfindlich ist, einzuspritzen, um die Schadstoffe dieser Gase zu behandeln.

2. Verfahren zur Reinigung der Abgase nach Anspruch 1, **dadurch gekennzeichnet, dass** es darin besteht, ein Katalysemittel zur selektiven katalytischen Reduktion als Katalysemittel der NOX (44), das wasserstoffempfindlich ist, zu verwenden.

3. Verfahren zur Reinigung der Abgase nach Anspruch 1, **dadurch gekennzeichnet, dass** es darin besteht, ein Oxidationskatalysemittel als Katalysemittel der NOX (44), das wasserstoffempfindlich ist, zu verwenden.

4. Verfahren zur Reinigung der Abgase nach einem der Ansprüche 1 bis 3, **dadurch gekennzeichnet, dass** es darin besteht, für eine Abgastemperatur von über etwa 150 °C die gasförmige Ammoniakphase in die Abgasleitung in Verbindung mit dem Katalysemittel zur selektiven katalytischen Reduktion der NOX (46), das ammoniakempfindlich ist, einzuspritzen, um die Schadstoffe dieser Gase zu behandeln.

5. Verfahren zur Reinigung der Abgase nach einem der vorhergehenden Ansprüche, **dadurch gekennzeichnet, dass** es darin besteht, für eine Abgastemperatur von über etwa 180 °C das Reduktionsmittel in die Abgasleitung in Verbindung mit dem Katalysemittel zur selektiven katalytischen Reduktion der NOX (46), das ammoniakempfindlich ist, einzuspritzen, um die Schadstoffe dieser Gase zu behandeln.

6. Verfahren zur Reinigung der Abgase nach einem der vorhergehenden Ansprüche, **dadurch gekennzeichnet, dass** es darin besteht, für eine Abgastemperatur von unter etwa 150 °C die gasförmige Wasserstoffphase in die Abgasleitung in Verbindung mit mindestens einem zusätzlichen Katalysemittel (70,72) einzuspritzen.

7. Verfahren zur Reinigung der Abgase nach einem der vorhergehenden Ansprüche, **dadurch gekennzeichnet, dass** es darin besteht, mindestens eine der Verbindungen in einen Behälter (64, 66) einzubringen.

8. Verfahren zur Reinigung der Abgase nach einem der vorhergehenden Ansprüche, **dadurch gekennzeichnet, dass** es darin besteht, das Einspritzen von mindestens einer der Verbindungen durch ein Dosierventil (60, 62) zu steuern.

9. Anlage zur Reinigung der Abgase, die in einer Abgasleitung zirkulieren, insbesondere einer Brennkraftmaschine, umfassend ein Katalysemittel zur selektiven katalytischen Reduktion der NOX (46), das ammoniakempfindlich ist, das auf der Abgasleitung angeordnet ist, Mittel zum Einspritzen (56, 58) eines Reduktionsmittels in die Leitung, um die Schadstoffe während des Durchgangs der Gase durch das Katalysemittel zu behandeln, und eines Elektrolysemittels (18) des Reduktionsmittels aufweist, **dadurch gekennzeichnet, dass** die Abgasleitung ein Katalysemittel der NOX (44), das wasserstoffempfindlich ist, und einen Einspritzer einer Verbindung in gasförmiger Wasserstoffphase (48), die von dem Elektrolysemittel stammt, aufweist, und dadurch, dass die Abgasleitung (12) einen Einspritzer einer Verbindung in gasförmiger Wasserstoffphase, die von dem Elektrolysemittel stammt, aufweist, um Ammoniak (54) vorgelagert vor dem Katalysemittel zur selektiven katalytischen Reduktion der NOX (44), das ammoniakempfindlich ist, einzuspritzen.

10. Anlage zur Reinigung der Abgase nach Anspruch 9, **dadurch gekennzeichnet, dass** sie einen Katalysator für die selektive katalytische Reduktion als Katalysemittel der NOX (44), das wasserstoffempfindlich ist, aufweist.

11. Anlage zur Reinigung der Abgase nach Anspruch 9, **dadurch gekennzeichnet, dass** es einen Oxidationskatalysator als Katalysemittel der NOX (44), das wasserstoffempfindlich ist, aufweist.

12. Anlage zur Reinigung der Abgase nach einem der Ansprüche 9 bis 11, **dadurch gekennzeichnet, dass** die Abgasleitung mindestens ein zusätzliches Katalysemittel (70, 72) aufweist, mit dem ein Einspritzer einer Verbindung in gasförmiger Wasserstoffphase (74a, 74b), die aus dem Elektrolysemittel (18) stammt, verbunden ist.

13. Anlage zur Reinigung der Abgase nach einem der Ansprüche 9 bis 12, **dadurch gekennzeichnet, dass** sie ein Dosierventil (60, 62, 78a, 78b) aufweist, das auf der Leitung (50, 52, 76a, 76b) angeordnet ist, die das Elektrolysemittel (18) mit dem Einspritzer (48, 54, 74a, 74b) verbindet.

14. Anlage zur Reinigung der Abgase nach einem der Ansprüche 9 bis 13, **dadurch gekennzeichnet, dass** sie einen Behälter (64, 66) aufweist, der auf der Leitung (50, 52, 76a, 76b) angeordnet ist, die das Elektrolysemittel (18) mit dem Einspritzer (48, 54, 74a, 74b) verbindet.

## Claims

1. A method for depolluting the exhaust gas circulating in an exhaust line (12), notably of an internal-combustion engine, said line comprising an ammonia-sensitive catalysis means (46) with selective nitrogen oxides catalytic reduction traversed by said gas and means (56, 58) for injecting a reductant into said line in order to treat the pollutants upon passage of the gas through the catalysis means, **characterized in that** it consists:
- in decomposing, by electrolysis, the reductant into a compound with a hydrogen gas phase and a compound with an ammonia gas phase, and
- for an exhaust gas temperature below approximately 150°C, in injecting the hydrogen gas phase from said electrolysis into the exhaust line in combination with a hydrogen-sensitive NOx catalysis means (44) for treating the pollutants in this gas.

2. An exhaust gas depollution method as claimed in claim 1, **characterized in that** it consists in using a catalysis means with selective catalytic reduction as hydrogen-sensitive NOx catalysis means (44).

3. An exhaust gas depollution method as claimed in claim 1, **characterized in that** it consists in using an oxidation catalysis means as hydrogen-sensitive NOx catalysis means (44).

4. An exhaust gas depollution method as claimed in any one of claims 1 to 3, **characterized in that** it consists, for an exhaust gas temperature above approximately 150°C, in injecting the ammonia gas phase into the exhaust line in combination with ammonia-sensitive catalysis means (46) with NOx selective catalytic reduction for treating the pollutants in this gas.

5. An exhaust gas depollution method as claimed in any one of the previous claims, **characterized in that** it consists, for an exhaust gas temperature above approximately 180°C, in injecting the reductant into the exhaust line in combination with ammonia-sensitive catalysis means (46) with NOx selective catalytic reduction for treating the pollutants in this gas.

6. An exhaust gas depollution method as claimed in any one of the previous claims, **characterized in that** it consists, for an exhaust gas temperature below approximately 150°C, in injecting the hydrogen gas phase into the exhaust line in combination with at least one additional catalysis means (70, 72).

7. An exhaust gas depollution method as claimed in any one of the previous claims, **characterized in that** it consists in placing at least one of the compounds in a tank (64, 66).

8. An exhaust gas depollution method as claimed in any one of the previous claims, **characterized in that** it consists in controlling the injection of at least one of the compounds by means of a dosing valve (60, 62).

9. A plant for depolluting the exhaust gas circulating in an exhaust line, notably of an internal-combustion engine, comprising an ammonia-sensitive catalysis means (46) with selective NOx catalytic reduction arranged on the exhaust line, means (56, 58) for injecting a reductant into said line in order to treat the pollutants upon passage of the gas through the catalysis means and a means (18) for electrolysis of the reductant, **characterized in that** the exhaust line comprises a hydrogen-sensitive NOx catalysis means (44) and an injector (48) for a hydrogen gas phase compound coming from the electrolysis means, and **in that** exhaust line (12) comprises an injector (54) for an ammonia gas phase compound coming from the electrolysis means for injecting the ammonia upstream from ammonia-sensitive catalysis means (46) with NOx selective catalytic reduction.

10. An exhaust gas depollution plant as claimed in claim 9, **characterized in that** it comprises a selective catalytic reduction catalyst as hydrogen-sensitive NOx catalysis means (44).

11. An exhaust gas depollution plant as claimed in claim 9, **characterized in that** it comprises an oxidation catalyst as hydrogen-sensitive NOx catalysis means (44).

12. An exhaust gas depollution plant as claimed in any one of claims 9 to 11, **characterized in that** the exhaust line comprises at least one additional catalysis means (70, 72) combined with an injector (74a, 74b) for injecting a hydrogen gas phase compound coming from electrolysis means (18).

13. An exhaust gas depollution plant as claimed in any one of claims 9 to 12, **characterized in that** it comprises a dosing valve (60, 62, 78a, 78b) arranged on pipe (50, 52, 76a, 76b) connecting electrolysis means (18) to injector (48, 54, 74a, 74b).

14. An exhaust gas depollution plant as claimed in any one of claims 9 to 13, **characterized in that** it comprises a tank (64, 66) arranged on pipe (50, 52, 76a, 76b) connecting electrolysis means (18) to injector (48, 54, 74a, 74b).
